Europäisches Patentamt

European Patent Office

Office européen des brevets

(19)

(11) Publication number: **0 429 388 A2**

## (12) EUROPEAN PATENT APPLICATION

(21) Application number: **90500107.9**

(22) Date of filing: **21.11.90**

(51) Int. Cl.⁵: **G09B 1/00, G09B 29/04**

(30) Priority: **23.11.89 ES 8903527 U**

(43) Date of publication of application:
**29.05.91 Bulletin 91/22**

(84) Designated Contracting States:
**DE FR GB GR IT**

(71) Applicant: **EDICIONES LEONESAS, S.A. (EDILESA)**
**Avenida General Sanjurjo No. 7**
**E-24001 Leon(ES)**

(72) Inventor: **Pastor Benavides, Jes s Vicente**
**General Sanjurjo No. 7**
**E-24001 Leon(ES)**

(74) Representative: **Gil Vega, Victor**
**Estébanez Calderon, 3 - 5B**
**E-28020 Madrid(ES)**

(54) **Educational folder.**

(57) The present invention refers to an educational folder specially designed to include literary as well as photographic information related to a specific subjeot, constituted by a laminar body, forming a triptych which contains a kind of booklet of big format photographs, with similar dimensions as the size of the middle section of the laminar body. The photographs are binded by means of an adhesive strip, together with a paperboard having the height of the photographs but a considerably minor width. The paperboard, located ad the button of the booklet, is fixed by its rear side to the internal face of the middle section of the laminar body. The photographs can be separated at any time for their separate use, for exemple as posters.

EP 0 429 388 A2

## EDUCATIONAL FOLDER

### OBJECT OF THE INVENTION

The present invention refers to an educational folder specially designed to include literary as well as photographic information related to a determined subject as, for example, a geographic region, a personality etc., with the additional particularity that this folder incorporates a set of big format photographs related with the corresponding subject, which can easily be separated for their use as poster for fixing to walls or similar purposes.

### DESCRIPTION OF THE INVENTION

The educational folder is constituted by a laminar body, preferably out of paperboard, forming a triptych the right part of which can be folded down covering the central part and then the left part folded down covering the right part to constitute the cover or front side of the folder; this front side incorporates the title of the corresponding subject of the folder and a big representative photograph of said subject, whilst the same section of the laminar body, on its internal side, the other end section on both sides and the middle section on its rear side, include smaller photographs, which are obviously also related to the same subject, and explanatory texts concerning the contents or related with it; likewise, it is possible that there is any type of supplementary information, as for instance, maps, graphic representations, tables, etc.

The above mentioned triptych contains a kind of booklet of big format photographs, with similar dimensions as the size of the middle section of the laminar body. The photographs are binded together with a paperboard having the height of the photographs but a considerably minor width, by means of an adhesive strip, permitting the later and easy separation one by one of these big format photographs. The paperboard located at the button of the booklet, is fixed by its rear side to the internal face of the middle section of the laminar body.

Thus, a folder is obtained which maintains conveniently protected and stabilized the big size photographs accommodated within it, folder which offers extensive information about a specific subject, to which correspond also the photographs. These photographs can be separated at any time for their separate use, for exemple as posters, and can coincide with and/or be different from other ones which are directly printed on the laminar body of the folder itself.

### DESCRIPTION OF THE DRAWINGS

In order to complete the above description and to provide for a better comprehension of the invention's characteristics, the present specification is accompanied, as an integral part of same, by one sole sheet of drawings representing the following:

Figure 1 - Shows a perspective view of an educational folder made according to the present invention. Here, the laminar body appears extended and the big size photographs booklet is represented separated from this laminar body.

Figure 2 - Shows a profile in section of the educational folder and booklet of photographs assembled; two blown up details show more clearly its configuration.

Figure 3 - Shows, in a similar view as that of figure 2, the whole folder duly closed.

### PREFERRED EMBODIMENTS OF THE INVENTION

The educational folder is constituted by a laminar rectangular body 1 of considerable dimensions, for which three sections are established, one side section 2, comprising the front side of the folder, middle section 3 comprising its reverse side, and another side section 4 which can be folded down between the two previous ones. The three sections form a kind of triptych where said sections 2, 3, and 4 are connected to each other by means of folding lines 5 and 6.

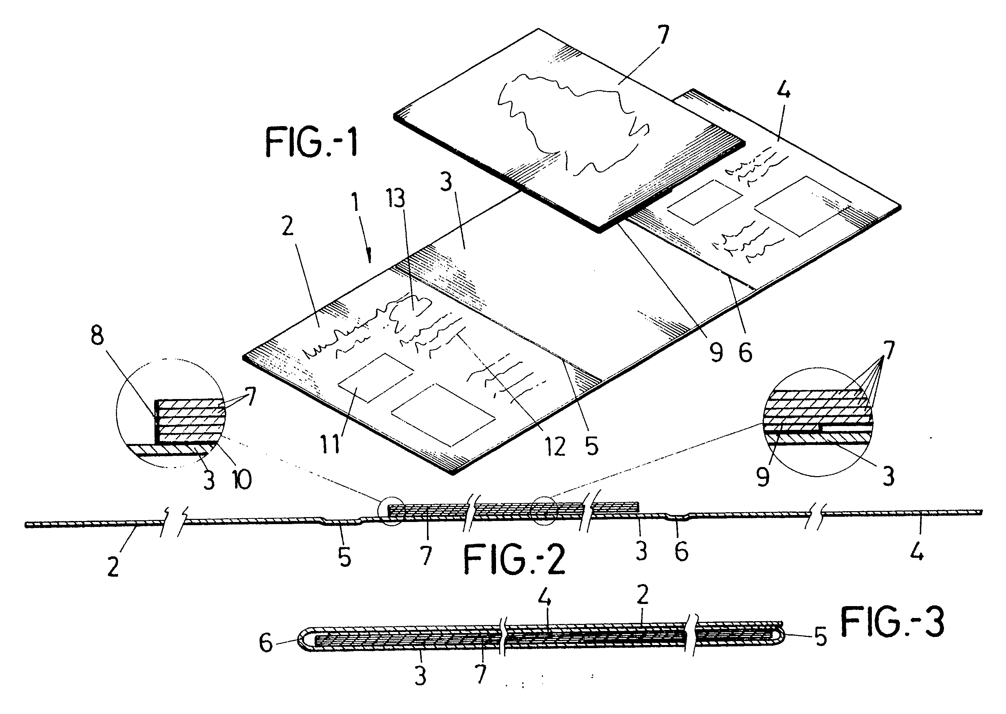

This triptych or, strictly speaking, folder 1 is completed with a booklet consisting in a great number of photographs 7 of big format, whose dimensions are similar to the ones of the middle section 3 of the folder itself; these photographs are fixed together through one of their edges by means of an adhesive strip 8, i.e. with a binding of the so called "American" type. This adhesive strip 8 fixes at the same time the group of big size photographs 7 to a paperboard 9 the heigth of which coincides with that of the photographs 7 whilst its width is considerably minor, as it can be specially observed in figure 2; this supplementary paperboard 9 serves as means for fastening the booklet to the folder itself; for this purpose this paperboard 9 is fixed by its rear side and by means of an adhesive film 10 to the internal side of the intermediate section 3 of the laminar body that constitutes the folder itself, as it can be observed in the enlarged details of figure 2.

As it can be specially observed in figure 3, when the folder is closed, the big size photographs booklet 7 is maintained fixed to the internal side of its section 3, perfectly protected by the end sections 2 and 4 of the folder, which can be opened to obtain the position as shown in figure 2, position in which the big size photographs booklet 7 is directly accessible either to examine the photographs, as if it was a book, or to separate them one by one for later use as posters or similar purposes.

Finally, to complete the described structure, the laminar body 1 bears on bcth sides of each section except on the side accommodating the booklet 7, a great number of photographs 11 which are directly represented on the paperboard itself; these photographs 11 are accompanied by texts 12 referred to them. On the front side of section 2 of the folder will preferably appear one sole bigger photographs as well as the folder's title.

As already mentioned above the folder itself may contain additional informations such as a maps 13, graphic representations, tables, etc., depending on the requirements of each specific subject.

## Claims

1.- Educational folder characterized in that it is constituted by a laminar body, preferably out of paperboard, provided with two folding lines which determine a triptych, where the right section can be folded down on the intermediate section and then the left section down on the right section, a booklet including a number of photographs related to a specific educational subject, of a size similar to the size of the middle section of the laminar body being fixed to the internal side of this middle section, the photographs being fixed together by one of their edges by means of an adhesive strip thus permitting the separation thereof one by one, with the particularity that this booklet of photographs also includes a paperboard with the same hight as te photographs but a minor width, which constitutes the connection link of the booklet to the triptych and which, to this end, is fixed to the latter through an adhesive film provided on its rear face, the laminar body which constitutes the triptych including also, in both sides of each section, except on the side accommodating the booklet of photographs, a great number of small photographs, directly printed on the laminar body and the corresponding explanatory texts, the front side of the cover section bearing only a printed big size photograph, which is representative for the corresponding subject, as well as the title of this subject.

FIG.-1

FIG.-2

FIG.-3

EP 0 429 388 A2